# EUROPEAN PATENT APPLICATION

(11) **EP 3 725 545 A1**
(43) Date of publication of application: **21.10.2020**
(21) Application number: 18889648.4
(22) Date of filing: 10.09.2018
(51) Int. Cl.: B60C 9/18, B60C 9/20

(54) **TIRE**

(30) Priority: 14.12.2017 JP 2017240024
(71) Applicant: Bridgestone Corporation, Chuo-Ku Tokyo 104-8340 (JP)
(72) Inventor: OTA, Saki, Tokyo 104-8340 (JP)
(74) Representative: Oxley, Robin John George
(86) International application number: PCT/JP2018/033472
(87) International publication number: WO 2019/116650

(57) **Abstract**

Provided is a technology with which, in a tire including a spiral cord layer in a crown portion, the occurrence of separation at a tire width-direction end of the spiral cord layer can be inhibited. A tire (10) includes: a carcass (14), which toroidally extends between a pair of bead portions; and a spiral cord layer (1), which is arranged on a tire radial-direction outer side of the carcass in a crown portion and in which an upper layer (1A) and a lower layer (1B) are formed by spirally winding reinforcing cords. In this tire (10), the reinforcing cords of the spiral cord layer have an angle in a range of 10° to 45° with respect to a tire circumferential direction, a belt under-cushion rubber (18) is arranged on a tire radial-direction inner side of a tire width-direction end of the spiral cord layer, and the belt under-cushion rubber has a 100% modulus in a range of 1 to 6 MPa.

## Description

### TECHNICAL FIELD

The present invention relates to a tire, particularly an improvement of a tire including, in a crown portion, a spiral cord layer in which an upper layer and a lower layer are formed by spirally winding reinforcing cords.

### BACKGROUND ART

A variety of studies have been conducted on tire reinforcing members. For example, as the structure of a belt used as a reinforcing member of a tire for passenger vehicles, a structure in which two or more intersecting belt layers whose reinforcing cord directions intersect with each other are arranged on the crown-portion tire radial-direction outer side of a carcass serving as a skeleton member of the tire is commonly adopted. In addition, as the structure of a belt, a mode in which upper and lower two belt layers are arranged such that their reinforcing cords intersect with each other, the reinforcing cords being folded back at the ends of the respective belt layers and configured to have a spirally wound structure in which the reinforcing cords extend from one belt layer to the other, is also known.

As such a structure, for example, Patent Document 1 discloses a pneumatic radial tire in which plural belt layers formed by arranging reinforcing cords are embedded on the outer peripheral side of a carcass layer in a tread portion, and upper and lower two belt layers are arranged such that their reinforcing cords composed of organic fibers intersect with each other. In this pneumatic radial tire, the reinforcing cords are folded back at the ends of the respective belt layers and configured to have a spirally wound structure in which they extend from one belt layer to the other, another belt layer formed by arranging reinforcing cords composed of steel cords is disposed between the upper and lower two belt layers, and the orientation angle α of the reinforcing cords of this belt layer is set at 45° to 65° with respect to the tire circumferential direction.

### RELATED ART DOCUMENT

### PATENT DOCUMENT

[Patent Document 1] JPH10-109502A

### SUMMARY OF THE INVENTION

### PROBLEMS TO BE SOLVED BY THE INVENTION

As disclosed in Patent Document 1, it is known to arrange a spiral cord layer, which is substantially constituted by upper and lower two layers each formed by spirally winding a reinforcing cord composed of organic fibers, on the outer peripheral side of a carcass layer for the purpose of improving the high-speed durability and the like of a tire, and it is also known to further arrange a core-material cord layer between the upper layer and the lower layer of this spiral cord layer.

However, in a tire provided with such a spiral cord layer, there are cases where separation occurs along the spiral cord layer during running due to repeated input on a tire width-direction end of the spiral cord layer. Particularly, such a spiral cord layer is different from an ordinary cut belt, whose reinforcing cords are cut at the tire width-direction ends, in that the reinforcing cords of the spiral cord layer are continuous between the upper layer and the lower layer; therefore, the spiral cord layer shows a different behavior against repeated input.

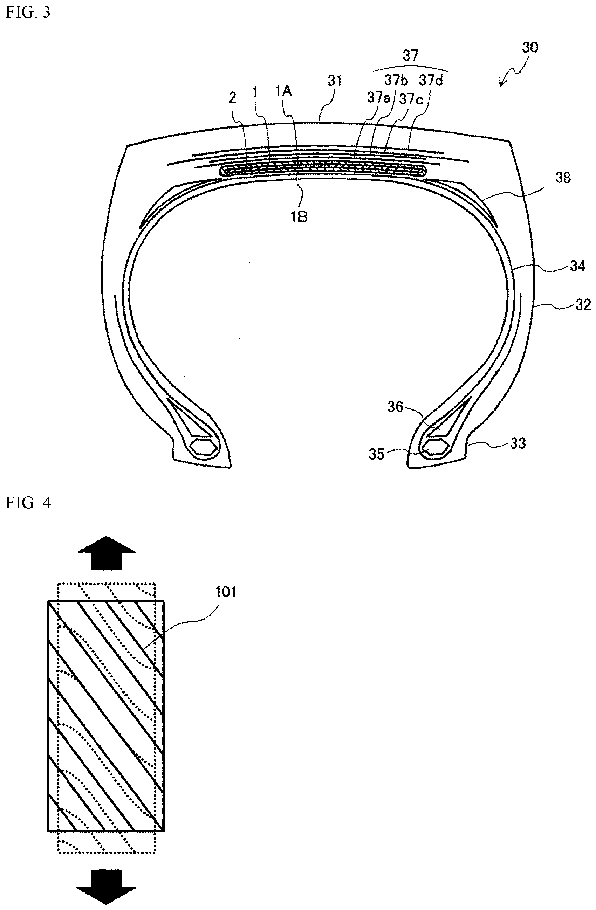

That is, as illustrated in FIG. 4, in the case of a cut belt, a tension generated along the tire circumferential direction as indicated by an arrow in an initial state (indicated with solid lines) causes the angle of reinforcing cords 101 to change only in the vicinity of each width-direction end and, when the angle of the reinforcing cords 101 is in a range of 0° to 54.7° with respect to the tire circumferential direction as illustrated in the drawing, the reinforcing cords 101 move closer toward the tire width direction (as indicated with dotted lines). Further, as illustrated in the drawing, the shrinkage of the cut belt itself in the tire width direction is small.

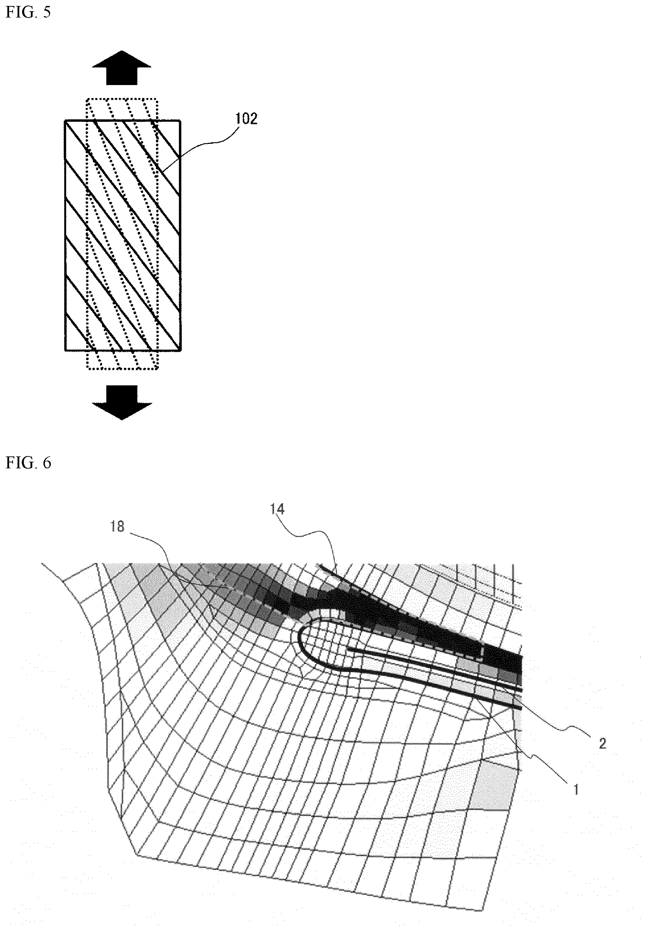

On the other hand, as illustrated in FIG. 5, in the case of a spiral cord layer, a tension generated along the tire circumferential direction in an initial state (indicated with solid lines) causes a change in the angle of reinforcing cords 102 as a whole and, as illustrated in the drawing, the reinforcing cords 102 move closer toward the tire circumferential direction (as indicated with dotted lines) regardless of the angle of the reinforcing cords 102. Further, in the spiral cord layer, since the reinforcing cords 102 are continuous between an upper layer and a lower layer, the shrinkage in the tire width direction is large as illustrated in the drawing, and torsion is generated in the reinforcing cords 102. Accordingly, the tension generated on the spiral cord layer in the tire circumferential direction is believed to cause a large strain at the tire width-direction ends of the spiral cord layer that shows a large shrinkage. Here, although not illustrated in the drawing, when the angle of the reinforcing cords 102 of the spiral cord layer is in a range of 45° to 90° with respect to the tire circumferential direction, a stress applied to the reinforcing cords 102 is smaller and the shrinkage of the spiral cord layer in the tire width direction is thus reduced; therefore, it is believed that the above-described generation of strain would be particularly notable when the angle of the reinforcing cords 102 is in a range of 0° to 45° with respect to the tire circumferential direction.

In view of the above, an object of the present invention is to provide a technology with which, in a tire including a spiral cord layer in a crown portion, the occurrence of separation at a tire width-direction end of the spiral cord layer can be inhibited.

### MEANS FOR SOLVING THE PROBLEMS

The present inventor intensively studied to discover that the above-described problems can be solved by arranging a belt under-cushion rubber having a prescribed modulus on a tire radial-direction inner side of a tire width-direction end of a spiral cord layer, particularly under the above-described cord angle condition that is likely to cause separation, thereby completing the present invention.

That is, the present invention is a tire including: a carcass which toroidally extends between a pair of bead portions; and a spiral cord layer which is arranged on a tire radial-direction outer side of the carcass in a crown portion and in which an upper layer and a lower layer are formed by spirally winding reinforcing cords.
the tire being characterized in that: the reinforcing cords of the spiral cord layer have an angle in a range of 10° to 45° with respect to a tire circumferential direction; a belt under-cushion rubber is arranged on a tire radial-direction inner side of a tire width-direction end of the spiral cord layer; and the belt under-cushion rubber has a 100% modulus in a range of 1 to 6 MPa.

The tire of the present invention preferably includes a core-material cord layer between the upper layer and the lower layer of the spiral cord layer. In the tire of the present invention, the 100% modulus of the belt under-cushion rubber is preferably in a range of 1 to 4.5 MPa.

### EFFECTS OF THE INVENTION

According to the present invention, a tire in which the occurrence of separation at a tire width-direction end of a spiral cord layer is inhibited and the durability is thereby improved can be realized.

### BRIEF DESCRIPTION OF THE DRAWINGS

[FIG. 1] FIG. 1 is a tire widthwise cross-sectional view illustrating one example of the constitution of a tire for trucks and buses according to the present invention.
[FIG. 2] FIG. 2 is a tire widthwise cross-sectional view illustrating one example of the constitution of a tire for passenger vehicles according to the present invention.
[FIG. 3] FIG. 3 is a tire widthwise cross-sectional view illustrating one example of the constitution of a tire for construction vehicles according to the present invention.
[FIG. 4] FIG. 4 is a drawing that illustrates a behavior of a cut belt subjected to repeated input applied in a tire circumferential direction.
[FIG. 5] FIG. 5 is a drawing that illustrates a behavior of a spiral cord layer subjected to repeated input applied in a tire circumferential direction.
[FIG. 6] FIG. 6 is a drawing that illustrates the state of a strain generated in the vicinity of a tire width-direction end of a spiral cord layer when the 100% modulus of a belt under-cushion rubber is 0.5 MPa.
[FIG. 7] FIG. 7 is a drawing that illustrates the state of a strain generated in the vicinity of a tire width-direction end of a spiral cord layer when the 100% modulus of a belt under-cushion rubber is 12 MPa.

### MODE FOR CARRYING OUT THE INVENTION

The present invention will now be described in detail referring to the drawings.

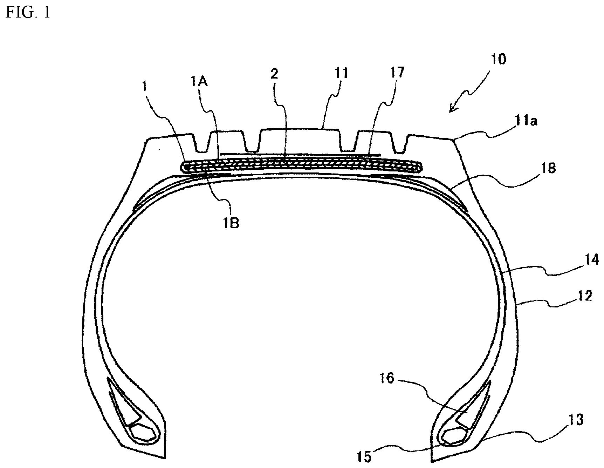

FIG. 1 is a tire widthwise cross-sectional view illustrating a tire for trucks and buses, which is one example of the tire of the present invention. An illustrated tire 10 includes: a tread portion 11 which forms a ground-contact part; a pair of side wall portions 12 which continuously extend inward in the tire radial direction on the respective sides of the tread portion 11; and bead portions 13 which continuously extend on the circumferential inner side of each side wall portion 12. The tread portion 11, the side wall portions 12 and the bead portions 13 are reinforced by a carcass 14, which is composed of a single carcass ply toroidally extending from one bead portion 13 to the other bead portion 13. In the illustrated tire 10 for trucks and buses, bead cores 15 are each embedded in the pair of the bead portions 13, and the carcass 14 is folded around the bead cores 15 from the inside to the outside of the tire and thereby anchored. In addition, bead fillers 16 are arranged on the tire radial-direction outer side of the respective bead cores 15.

Further, the tire of the present invention includes, on the tire radial-direction outer side of the carcass 14 in a crown portion, a spiral cord layer 1 having a structure in which an upper layer 1A and a lower layer 1B are formed by spirally winding reinforcing cords.

The present invention is characterized in that a belt under-cushion rubber 18 is arranged on a tire radial-direction inner side of each tire width-direction end of the spiral cord layer 1, and that this belt under-cushion rubber 18 has a 100% modulus in a range of 1 to 6 MPa. By setting the 100% modulus of the belt under-cushion rubber 18 arranged on the tire radial-direction inner side of each tire width-direction end of the spiral cord layer 1 to be in the above-described range, a strain generated at each tire width-direction end of the spiral cord layer 1 is reduced, as a result of which the occurrence of separation along the spiral cord layer 1 can be effectively inhibited, and the tire durability can thereby be improved.

FIG. 6 is a drawing that illustrates the state of a strain generated in the vicinity of a tire width-direction end of the spiral cord layer 1 when the 100% modulus of the belt under-cushion rubber 18 is 0.5 MPa. In this drawing, a darker part represents a larger strain, and the belt under-cushion rubber 18 is arranged at a site indicated by a gray dotted line. As illustrated, when the 100% modulus of the belt under-cushion rubber 18 is less than 1 MPa, an end portion of the belt under-cushion rubber 18 on the tire equator side in the tire width direction easily moves and a strain is thereby increased, as a result of which separation may occur between the belt under-cushion rubber 18 and the carcass 14 arranged on the tire radial-direction inner side of the belt under-cushion rubber 18.

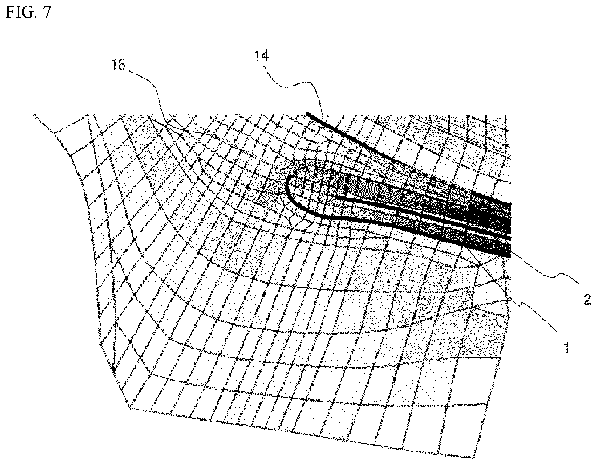

FIG. 7 is a drawing that illustrates the state of a strain generated in the vicinity of a tire width-direction end of the spiral cord layer 1 when the 100% modulus of the belt under-cushion rubber 18 is 12 MPa. When the 100% modulus of the belt under-cushion rubber 18 is higher than 6 MPa, not only the strain-reducing effect levels off but also the generation of heat is increased due to an excessively high tan δ; therefore, the durability of the tire is deteriorated and the rolling resistance is increased. In addition, the strain at a tire width-direction end of the spiral cord layer 1 is increased. The 100% modulus of the belt under-cushion rubber 18 is preferably in a range of 1 to 4.5 MPa.

What is important in the present invention is only that the 100% modulus of the belt under-cushion rubber 18 be controlled in the above-prescribed range, and this enables to attain the expected effects of the present invention. Other constitutions are not particularly restricted, and the tire of the present invention can be configured as appropriate in accordance with a conventional method. For instance, the formulation and other physical property values of a blended rubber used in the belt under-cushion rubber 18 are not particularly restricted and may be selected as appropriate in accordance with a conventional method.

The term "100% modulus of the belt under-cushion rubber 18" used herein means a tensile stress at 100% elongation, which is measured for a JIS dumbbell No. 3 sample by performing a tensile test at room temperature (25°C) and a tensile rate of 500 ± 25 mm/min in accordance with JIS K6251.

In the present invention, the region where the belt under-cushion rubber 18 is to be arranged is also not particularly restricted; however, it is required that the belt under-cushion rubber 18 be arranged at least on the tire radial-direction inner side of a tire width-direction end of the spiral cord layer. Further, when a core-material cord layer 2 is arranged, it is preferred to reduce a strain by arranging the belt under-cushion rubber 18 at least in a region from a tire width-direction end of the spiral cord layer 1 to a tire width-direction end of the core-material cord layer 2.

In the present invention, the spiral cord layer 1 is formed by spirally winding a rubber-cord composite, which is obtained by parallelly arranging a single or plural (e.g., 2 to 100) reinforcing cords and coating the resultant with a rubber, in the form of a flat strip, or by spirally winding the rubber-cord composite around the core-material cord layer 2. The end count of the reinforcing cords in the spiral cord layer 1 is preferably in a range of, for example, 5 to 60 cords/50 mm.

Further, in the present invention, the angle of the reinforcing cords of the spiral cord layer 1 is in a range of 10° to 45° with respect to the tire circumferential direction. As described above, the generation of a strain particularly at a tire width-direction end of the spiral cord layer 1 presents a problem when the angle of the reinforcing cords of the spiral cord layer 1 is close to the tire circumferential direction; therefore, the present invention is useful in such a case. It is noted here that, in the present invention, the angle of the reinforcing cords of the spiral cord layer 1 may be a value measured on the tire equatorial plane. This angle is preferably in a range of 12° to 45° with respect to the tire circumferential direction.

In the illustrated example, the spiral cord layer 1 includes a core-material cord layer 2 between the upper layer 1A and the lower layer 1B, i.e. the spiral cord layer 1 is formed by spirally winding reinforcing cords on the core-material cord layer 2; however, the present invention is not restricted to this constitution, and the core-material cord layer 2 does not have to be arranged. When the core-material cord layer 2 is arranged, it may be arranged singly, or a plurality thereof (e.g., 2 to 10) may be arranged in a laminated manner. The core-material cord layer 2 is produced by parallelly arranging a large number of core-material cords and subsequently arranging an unvulcanized rubber on top and bottom thereof to coat the core-material cords with the rubber. The end count of the core-material cords in the core-material cord layer 2 is preferably in a range of, for example, 5 to 60 cords/50 mm.

In the present invention, the core-material cords of the core-material cord layer 2 may have an inclination angle of 40° to 90° with respect to the tire circumferential direction. By controlling the angle of the core-material cords to be in this range, the tension of the core-material cords is reduced, so that the core-material cords are given an increased leeway before being fractured. This consequently makes the core-material cords less likely to be fractured even when an input is applied thereto from an obstacle. In order to favorably attain this effect, the inclination angle of the core-material cords of the core-material cord layer 2 is more preferably 50° to 90°. When plural core-material cord layers 2 are arranged, the plural core-material cord layers 2 may constitute intersecting belt layers.

In the present invention, the material of the reinforcing cords of the spiral cord layer 1 and that of the core-material cords of the core-material cord layer 2 are not particularly restricted, and various metal cords, organic fiber cords and the like that are conventionally and commonly used can be employed as appropriate. Specific examples of the metal cords that can be used include steel filaments, and steel cords obtained by twisting plural steel filaments together. In this case, various designs can be adopted for the twist structure of the cords, and various cross-sectional structures, twist pitches, twist directions and distances between adjacent filaments can be employed. As the cross-sectional structures, various twist structures such as single twist, layer twist and multi-twist can be adopted, and cords having a flat cross-sectional shape can be used as well. The steel filaments constituting the steel cords contain iron as a main component, and may further contain various trace elements, such as carbon, manganese, silicon, phosphorus, sulfur, copper, and chromium. Moreover, on the surface of the steel filaments, brass plating may be performed for improvement of the adhesion with a rubber.

As organic fibers, for example, aramid fibers (aromatic polyamide fibers), polyketone (PK) fibers, poly-*p*-phenylene benzobisoxazole (PBO) fibers, and polyarylate fibers can be used. In addition, for example, carbon fibers, such as polyacrylonitrile (PAN)-based carbon fibers, pitch-based carbon fibers and rayon-based carbon fibers, as well as glass fibers and rock fibers (rock wool), such as basalt fibers and andesite fibers, can also be used. It is noted here that these reinforcing cords are preferably treated with an adhesive so as to improve their adhesion with a rubber. This adhesive treatment can be performed in accordance with a conventional method using a commonly-used adhesive such as an RFL-based adhesive. Further, hybrid cords composed of two or more kinds of the above-described fibers may be used as well.

In the present invention, a rubber composition used as a coating rubber of the spiral cord layer 1 and the core-material cord layer 2 is not particularly restricted and any known rubber composition can be used. For example, as a rubber component contained in the rubber composition used as the coating rubber, any known rubber component can be used, and examples thereof include natural rubbers and synthetic rubbers, such as vinyl aromatic hydrocarbon-conjugated diene copolymers, polyisoprene rubbers, butadiene rubbers, butyl rubbers, halogenated butyl rubbers, and ethylene-propylene rubbers. These rubber components may be used individually, or two or more thereof may be used in combination. From the standpoints of the characteristics of adhesion with metal cords and the fracture characteristics of the rubber composition, the rubber component is preferably one composed of at least either a natural rubber or a polyisoprene rubber, or one which contains a natural rubber in an amount of not less than 50% by mass and in which the remainder is composed of a synthetic rubber.

In the rubber composition used as the coating rubber in the present invention, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine, and hexamethylene methylmelamine), vulcanization accelerators, vulcanization aids and age resistors, can be incorporated as appropriate in an ordinary amount. Further, a method of preparing the rubber composition used as the coating rubber in the present invention is not particularly restricted and, the rubber composition can be prepared by, for example, kneading sulfur, an organic acid cobalt salt and various additives into a rubber component using a Banbury mixer, a roll or the like in accordance with a conventional method.

In the illustrated tire 10 for trucks and buses, an auxiliary belt layer 17 is arranged on the tire radial-direction outer side of the spiral cord layer 1. In the present invention, the auxiliary belt layer may be arranged as desired. The auxiliary belt layer 17 can be an inclined belt in which belt cords have a prescribed angle with respect to the tire circumferential direction, and the auxiliary belt layer 17 is formed by parallelly arranging a large number of belt cords and coating the belt cords with a rubber.

In the present invention, the angle of the belt cords of the auxiliary belt layer 17 with respect to the tire circumferential direction is preferably in a range of 0° to 45°, more preferably in a range of 0° to 20°. When the angle of the belt cords is larger than 45° with respect to the tire circumferential direction, since the belt cords can bear hardly any tension generated in the tire circumferential direction, an effect of improving the durability of the reinforcing cords of the spiral cord layer cannot be attained. Moreover, the belt cords of the auxiliary belt layer 17 and the reinforcing cords of the upper layer 1A of the adjacent spiral cord layer 1 may be inclined in the same direction or in the opposite directions, with respect to the tire circumferential direction.

As reinforcing cords of the auxiliary belt layer, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting together filaments of different materials can be used. The cross-sectional structure thereof is not particularly restricted, and various twist structures such as single twist, layer twist and multi-twist can be adopted. Moreover, the width of the auxiliary belt layer 17 is preferably 40% to 115%, particularly preferably 50% to 70%, of the tread width.

In the tire 10 for trucks and buses according to the present invention, a variety of configurations including conventional structures can be adopted for the carcass 14, and the carcass 14 may have a radial structure or a bias structure. The carcass 14 is preferably constituted by one or two carcass plies each composed of a steel cord layer. Further, the carcass 14 may have its maximum-width positions in the tire radial direction, for example, on the side closer to the respective bead portions 13 or on the side closer to the tread portion 11. For example, the maximum-width positions of the carcass 14 can be arranged in a range of 50% to 90% from each bead base on the tire radial-direction outer side with respect to the tire height. Moreover, as illustrated, the carcass 14 is generally and preferably configured to extend between the pair of the bead cores 15 without interruption; however, the carcass 14 may be constituted by a pair of carcass pieces that extend from the respective bead cores 15 and are interrupted in the vicinity of the tread portion 11.

A variety of structures can be adopted for the folded parts of the carcass 14. For example, the folded ends of the carcass 14 can be positioned on the tire radial-direction inner side than the upper ends of bead fillers 16, and the folded ends of the carcass may extend further on the tire radial-direction outer side than the upper ends of the bead fillers 16 or the tire maximum-width positions. In this case, the folded ends of the carcass 14 may extend further on the tire width-direction inner side than the tire width-direction ends of the spiral cord layer 1. Further, in cases where the carcass 14 is constituted by plural carcass plies, the positions of the folded ends of the carcass 14 along the tire radial direction may be different from each other. Alternatively, the carcass 14 may take a structure in which the carcass 14 is sandwiched by plural bead core members or wound around the bead cores 15, without any folded part. The end count of the carcass 14 is generally in a range of 5 to 60 cords/50 mm; however, the end count is not restricted thereto.

Further, in the tire 10 for trucks and buses according to the present invention, a circumferential cord layer (not illustrated) may be arranged on the tire radial-direction outer side of the spiral cord layer 1 and the auxiliary belt layer 17.

In the tire 10 for trucks and buses according to the present invention, a known structure can be adopted also for the side wall portions 12. For example, the tire maximum-width positions can be arranged in a range of 50% to 90% from each bead base on the tire radial-direction outer side with respect to the tire height. In the tire 10 for trucks and buses according to the present invention, it is preferred that the side wall portions 12 be each formed as a smooth curve having a convex shape in the tire width direction without a recess that comes into contact with the rim flange, which is different from the tire for passenger vehicles.

Moreover, a variety of structures, such as a circular shape and a polygonal shape, can be adopted for the bead cores 15. It is noted here that, as described above, the bead portions 13 may have a structure in which the carcass 14 is wound on the bead cores 15, or a structure in which the carcass 14 is sandwiched by plural bead core members. In the illustrated tire 10 for trucks and buses, bead fillers 16 are arranged on the tire radial-direction outer side of the respective bead cores 15, and the bead fillers 16 may each be constituted by plural rubber members that are separated from each other in the tire radial direction.

In the tire 10 for trucks and buses according to the present invention, the tread pattern may be a pattern mainly constituted by rib-like land portions, a block pattern or an asymmetrical pattern, and the tread pattern may have a designated rotation direction.

The pattern mainly constituted by rib-like land portions is a pattern which is mainly constituted by rib-like land portions that are partitioned in the tire width direction by at least one circumferential groove or by a circumferential groove(s) and tread ends. The term "rib-like land portions" used herein refers to land portions that extend in the tire circumferential direction without any lateral groove across the tire width direction; however, the rib-like land portions may have sipes and lateral grooves terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern with no lateral groove. In such a pattern, the drainage performance in this region largely contributes to the wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings. Further, in the tread portion, it is preferred that a corner 11a be formed at each tire width-direction end.

The tire illustrated in FIG. 1 is a tire for trucks and buses; however, the present invention is not restricted thereto and can also be suitably applied to, for example, tires for passenger vehicles, tires for construction vehicles, tires for two-wheeled vehicles, tires for airplanes, and tires for agricultural vehicles. Further, the tire is not restricted to be a pneumatic tire and can also be applied as a solid tire or a non-pneumatic tire.

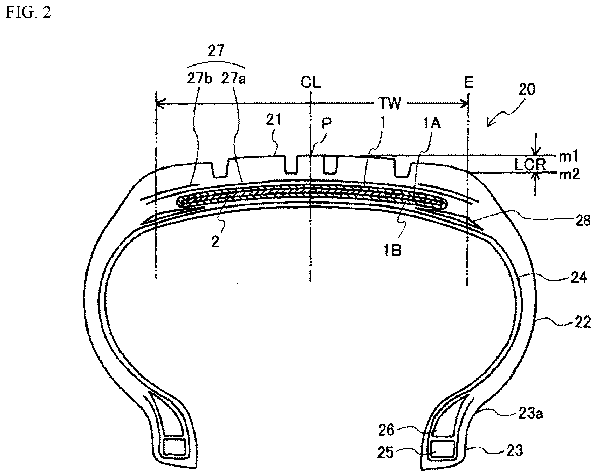

FIG. 2 is a tire widthwise cross-sectional view illustrating one example of the constitution of a tire for passenger vehicles according to the present invention. An illustrated tire 20 for passenger vehicles includes: a tread portion 21 which forms a ground-contact part; a pair of side wall portions 22 which continuously extend inward in the tire radial direction on the respective sides of the tread portion 21; and bead portions 23 which continuously extend on the circumferential inner side of each side wall portion 22. The tread portion 21, the side wall portions 22 and the bead portions 23 are reinforced by a carcass 24, which is composed of a single carcass ply toroidally extending from one bead portion 23 to the other bead portion 23. In the illustrated tire 20 for passenger vehicles, bead cores 25 are each embedded in the pair of the bead portions 23, and the carcass 24 is folded around the bead cores 25 from the inside to the outside of the tire and thereby anchored. In addition, bead fillers 26 are arranged on the tire radial-direction outer side of the respective bead cores 25.

In the illustrated tire 20 for passenger vehicles, on the tire radial-direction outer side of the carcass 24 in the crown portion, a spiral cord layer 1 having a structure in which an upper layer 1A and a lower layer 1B are formed by spirally winding reinforcing cords, a cord-material cord layer 2 positioned between the upper layer 1A and the lower layer 1B, and two belt layers 27a and 27b are sequentially arranged.

In the present invention, it is important that a belt under-cushion rubber 28 having the above-prescribed 100% modulus be arranged on the tire radial-direction inner side of a tire width-direction end of the spiral cord layer 1, and this enables to attain the expected effects of the present invention.

In the tire 20 for passenger vehicles according to the present invention, a variety of configurations including conventional structures can be adopted for the carcass 24, and the carcass 24 may have a radial structure or a bias structure. The carcass 24 is preferably constituted by one or two carcass plies each composed of an organic fiber cord layer. Further, the carcass 24 may have its maximum-width positions in the tire radial direction, for example, on the side closer to the respective bead portions 23 or on the side closer to the tread portion 21. For example, the maximum-width positions of the carcass 24 can be arranged in a range of 50% to 90% from each bead base on the tire radial-direction outer side with respect to the tire height. Moreover, as illustrated, the carcass 24 is generally and preferably configured to extend between the pair of the bead cores 25 without interruption; however, the carcass 24 may be constituted by a pair of carcass pieces that extend from the respective bead cores 25 and are interrupted in the vicinity of the tread portion 21 (not illustrated).

A variety of structures can be adopted for the folded parts of the carcass 24. For example, the folded ends of the carcass 24 can be positioned on the tire radial-direction inner side than the upper ends of bead fillers 26, and the folded ends of the carcass 24 may extend further on the tire radial-direction outer side than the upper ends of the bead fillers 26 or the tire maximum-width positions. In this case, the folded ends of the carcass 24 may extend further on the tire width-direction inner side than the tire width-direction ends of the spiral cord layer 1. Further, in cases where the carcass 24 is constituted by plural carcass plies, the positions of the folded ends of the carcass 24 along the tire radial direction may be different from each other. Alternatively, the carcass 24 may take a structure in which the carcass 24 is sandwiched by plural bead core members or wound around the bead cores 25, without any folded part. The end count of the carcass 24 is generally in a range of 5 to 60 cords/50 mm; however, the end count is not restricted thereto.

In the case of the tire for passenger vehicles that is illustrated in FIG. 2, as an auxiliary belt layer 27, a cap layer 27a which is arranged over the entire width or more of the spiral cord layer 1, or a layered layer 27b which is arranged in the regions covering the respective ends of the spiral cord layer 1 can be provided. Usually, the cap layer 27a and the layered layer 27b are each formed by spirally winding a constant-width strip, which is obtained by paralleling and rubber-coating a large number of cords, along the tire circumferential direction. The cap layer 27a and the layered layer 27b may each be arranged alone, or both of them may be arranged in combination. Alternatively, the auxiliary belt layer 27 may be a combination of two or more cap layers and/or two or more layered layers.

Various materials can be used as the reinforcing cords of the cap layer 27a and the layered layer 27b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting plural filaments together, or hybrid cords obtained by twisting together filaments of different materials can be used as well. Further, in order to increase the breaking strength, wavy cords may be used as the reinforcing cords. Similarly, in order to increase the breaking strength, for example, high-elongation cords having an elongation at break of 4.5% to 5.5% may be used.

The end count of the cap layer 27a and that of the layered layer 27b are generally in a range of 20 to 60 cords/50 mm; however, the end counts are not restricted thereto. The cap layer 27a may be imparted with distribution in the tire width direction in terms of rigidity, material, number of layers, cord density and the like and, for example, the number of layers can be increased only at the tire width-direction ends, or only in the central part.

From the production standpoint, it is particularly advantageous to configure the cap layer 27a and the layered layer 27b as spiral layers. In this case, these layers may be constituted by strip-form cords in which plural core wires arranged in parallel to each other in a plane are bundled together by a wrapping wire with the parallel arrangement being maintained.

With regard to the shape of the tread portion 21 in the tire 20 for passenger vehicles according to the present invention that has a narrow width and a large diameter, when, at a tire widthwise cross-section, a straight line that runs through a point P on the tread surface in the tire equatorial plane CL and is parallel to the tire width direction is defined as "m1", a straight line that runs through a ground-contact end E and is parallel to the tire width direction is defined as "m2", the distance between the straight lines m1 and m2 in the tire radial direction is defined as fall height "LCR" and the tread width of the tire is defined as "TW", a ratio LCR/TW is preferably 0.045 or lower. By controlling the ratio LCR/TW in this range, the crown portion of the tire is flattened (planarized), so that the ground-contact area is increased and the input (pressure) from the road surface is thus alleviated, whereby the deflection rate in the tire radial direction can be reduced and the durability and the wear resistance of the tire can be improved. Further, the tread ends are preferably smooth.

The tread pattern may be a full-lug pattern, a pattern mainly constituted by rib-like land portions, a block pattern or an asymmetrical pattern, and the tread pattern may have a designated rotation direction.

The full-lug pattern may be a pattern that includes widthwise grooves extending in the tire width direction from the vicinity of the equatorial plane to the ground-contact ends and, in this case, the pattern is not required to have a circumferential groove. Such a pattern mainly constituted by lateral grooves is capable of effectively exerting on-snow performance in particular.

The pattern mainly constituted by rib-like land portions is a pattern which is mainly constituted by rib-like land portions that are partitioned in the tire width direction by at least one circumferential groove or by a circumferential groove(s) and tread ends. The term "rib-like land portions" used herein refers to land portions that extend in the tire circumferential direction without any lateral groove across the tire width direction; however, the rib-like land portions may have sipes and lateral grooves terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern with no lateral groove. In such a pattern, the drainage performance in this region largely contributes to the wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber or a foamed rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings.

In the tire 20 for passenger vehicles according to the present invention, a known structure can be adopted also for the side wall portions 22. For example, the tire maximum-width positions can be arranged in a range of 50% to 90% from each bead base on the tire radial-direction outer side with respect to the tire height. Further, a structure including a rim guard may be adopted as well. In the tire 20 for passenger vehicles according to the present invention, it is preferred that a recess 23a, which comes into contact with the rim flange, be formed.

Moreover, a variety of structures, such as a circular shape and a polygonal shape, can be adopted for the bead cores 25. It is noted here that, as described above, the bead portions 23 may have a structure in which the carcass 24 is wound on the bead cores 25, or a structure in which the carcass 24 is sandwiched by plural bead core members. In the illustrated tire 20 for passenger vehicles, bead fillers 26 are arranged on the tire radial-direction outer side of the respective bead cores 25; however, the bead fillers 26 may be omitted in the tire 20 for passenger vehicles according to the present invention.

In the tire for passenger vehicles according to the present invention, usually, an inner liner may be arranged in the innermost layer of the tire, although it is not illustrated in the drawing. The inner liner may be constituted by a rubber layer mainly composed of butyl rubber, or a film layer containing a resin as a main component. Further, although not illustrated in the drawing, a porous member may be arranged and an electrostatic flocking process may be performed on the tire inner surface for the purpose of reducing cavity resonance noise. Moreover, on the tire inner surface, a sealant member for the inhibition of air leakage upon puncture of the tire may be arranged as well.

The use of the tire 20 for passenger vehicles is not particularly restricted. The tire 20 can be suitably used as a summer tire, an all-season tire, or a winter tire. It is also possible to use the tire 20 as a tire for passenger vehicles that has a special structure, such as a side-reinforced run-flat tire having a crescent-shaped reinforcing rubber layer in the side wall portions 22, or a studded tire.

FIG. 3 is a tire widthwise cross-sectional view illustrating one example of the constitution of the tire for construction vehicles according to the present invention. The illustrated tire 30 for construction vehicles includes: a tread portion 31 which forms a ground-contact part; a pair of side wall portions 32 which continuously extend inward in the tire radial direction on the respective sides of the tread portion 31; and bead portions 33 which continuously extend on the circumferential inner side of each side wall portion 32. The tread portion 31, the side wall portions 32 and the bead portions 33 are reinforced by a carcass 34, which is composed of a single carcass ply toroidally extending from one bead portion 33 to the other bead portion 33. In the illustrated tire 30 for construction vehicles, bead cores 35 are each embedded in the pair of the bead portions 33, and the carcass 34 is folded around the bead cores 35 from the inside to the outside of the tire and thereby anchored. In addition, bead fillers 36 are arranged on the tire radial-direction outer side of the respective bead cores 35.

In the illustrated tire 30 for construction vehicles, on the tire radial-direction outer side of the carcass 34 in the crown region, a spiral cord layer 1 having a structure in which an upper layer 1A and a lower layer 1B are formed by spirally winding reinforcing cords, a core-material cord layer 2 positioned between the upper layer 1A and the lower layer 1B, and four belt layers 37a to 37d are sequentially arranged. In the present invention, it is important that a belt under-cushion rubber 38 having the above-prescribed 100% modulus be arranged on the tire radial-direction inner side of a tire width-direction end of the spiral cord layer 1, and this enables to attain the expected effects of the present invention.

In the tire 30 for construction vehicles, four belt layers 37 can be arranged as auxiliary belt layers. Generally, a tire for construction vehicles includes four to six belt layers and, when the tire for construction vehicles includes six belt layers, first and second belt layers constitute an inner intersecting belt layer group; third and fourth belt layers constitute a middle intersecting belt layer group; and fifth and sixth belt layers constitute an outer intersecting belt layer group. In the tire for construction vehicles according to the present invention, the inner intersecting belt layer group is replaced with the spiral cord layer 1, and the auxiliary belt layers 37a to 37d are arranged as the middle and outer intersecting belt layer groups. Meanwhile, in the case of a tire for construction vehicles that includes four belt layers, the first and the second belt layers may be replaced with the spiral cord layer 1, and the third and the fourth belt layers may be the auxiliary belt layers 37a and 37b.

When the tire for construction vehicles includes six belt layers, in the tread width direction, the width of the spiral cord layer 1 can be 25% to 70% of the width of the tread surface; the width of the auxiliary belt layers 37a and 37b can be 55% to 90% of the width of the tread surface; and the width of the auxiliary belt layers 37c and 37d can be 60% to 110% of the width of the tread surface. Further, in a tread planar view, the inclination angle of the belt cords of the auxiliary belt layers 37a and 37b can be set at 50° to 75° with respect to the carcass cords, and the inclination angle of the belt cords of the auxiliary belt layer 37c and 37d can be set at 70° to 85° with respect to the carcass cords.

In the tire 30 for construction vehicles according to the present invention, the auxiliary belt layers 37 may be inclined belts which are each composed of a rubberized layer of reinforcing cords and have a prescribed angle with respect to the tire circumferential direction. As the reinforcing cords of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting together filaments of different materials can be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, among the auxiliary belt layers 37, the width of a maximum-width inclined belt layer having the largest width is preferably 90% to 115%, particularly preferably 100% to 105%, of the tread width.

In the tire for construction vehicles according to the present invention, a variety of constitutions including conventional structures can be adopted for the carcass 34, and the carcass 34 may have a radial structure or a bias structure. The carcass 34 is preferably constituted by one or two carcass plies each composed of a steel cord layer. Further, the carcass 34 may have its maximum-width positions in the tire radial direction, for example, on the side closer to the respective bead portions 33 or on the side closer to the tread portion 31. For example, the maximum-width positions of the carcass 34 can be arranged in a range of 50% to 90% from each bead base on the tire radial-direction outer side with respect to the tire height. Moreover, as illustrated, the carcass 34 is generally and preferably configured to extend between the pair of the bead cores 35 without interruption; however, the carcass 34 can also be constituted by a pair of carcass pieces that extend from the respective bead cores 35 and are interrupted in the vicinity of the tread portion 31.

A variety of structures can be adopted for the folded parts of the carcass 34. For example, the folded ends of the carcass 34 can be positioned on the tire radial-direction inner side than the upper ends of bead fillers 36, and the folded ends of the carcass 34 may extend further on the tire radial-direction outer side than the upper ends of the bead fillers 36 or the tire maximum-width positions. In this case, the folded ends of the carcass 34 may extend further on the tire width-direction inner side than the tire width-direction ends of the spiral cord layer 1. Further, in cases where the carcass 34 is constituted by plural carcass plies, the positions of the folded ends of the carcass 34 along the tire radial direction may be different from each other. Alternatively, the carcass 34 may take a structure in which the carcass 34 is sandwiched by plural bead core members or wound around the bead cores 35, without any folded part. The end count of the carcass 34 is generally in a range of 5 to 60 cords/50 mm; however, the end count is not restricted thereto.

In the tire 30 for construction vehicles according to the present invention, a known structure can be adopted also for the side wall portions 32. For example, the tire maximum-width positions can be arranged in a range of 50% to 90% from each bead base on the tire radial-direction outer side with respect to the tire height. In the tire 30 for construction vehicles according to the present invention, it is preferred that a recess, which comes into contact with the rim flange, be formed.

Moreover, a variety of structures, such as a circular shape and a polygonal shape, can be adopted for the bead cores 35. It is noted here that, as described above, the bead portions 33 may have a structure in which the carcass 34 is wound on the bead cores 35, or a structure in which the carcass 34 is sandwiched by plural bead core members. In the illustrated tire 30 for construction vehicles, bead fillers 36 are arranged on the tire radial-direction outer side of the respective bead cores 35, and the bead fillers 36 may each be constituted by plural rubber members that are separated from each other in the tire radial direction.

In the tire 30 for construction vehicles according to the present invention, the tread pattern may be a lug pattern, a block pattern or an asymmetrical pattern, and the tread pattern may have a designated rotation direction.

The lug pattern may be a pattern that includes widthwise grooves extending in the tire width direction from the vicinity of the equatorial plane to the ground-contact ends and, in this case, the pattern is not required to have a circumferential groove.

The block pattern is a pattern including block land portions that are partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by plural rubber layers that are different from each other along the tire radial direction, and the tread rubber may have, for example, a so-called cap-base structure. As the plural rubber layers, those that are different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers that are different from each other along the tire width direction, and the tread rubber may have a so-called divided tread structure. As the plural rubber layers, those that are different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the shoulder land portions or only the center land portion, may be constituted by a rubber layer(s) different from the surroundings.

In the tire 30 for construction vehicles, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground-contact surface of the tread portion 31 (negative ratio) is preferably not higher than 20%. The reason for this is because the tire 30 for construction vehicles is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of examples thereof.

Reinforcing cords were spirally wound on a single core-material cord layer to prepare a reinforcing member that had a structure including the core-material cord layer between an upper layer and a lower layer of a spiral cord layer. The thus obtained reinforcing member was arranged on the tire radial-direction outer side of a carcass in the crown portion, and an auxiliary belt layer was further arranged on the tire radial-direction outer side of this reinforcing member, whereby a tire for trucks and buses as illustrated in FIG. 1 was produced at a tire size of 275/80R22.5.

As core-material cords of the core-material cord layer and belt cords of the auxiliary belt layer, steel cords having a 1+6 structure composed of steel filaments of 1.13 mm in diameter were used. The inclination angle of the reinforcing cords of the core-material cord layer was set at 70° with respect to the longitudinal direction of the reinforcing member. The inclination angle of the reinforcing cords of the spiral cord layer and the inclination angle of the steel cords of the auxiliary belt layer were set at 16° with respect to the longitudinal direction of the reinforcing member.

Further, the inclination direction of the steel cords of the auxiliary belt layer was the same as that of the reinforcing cords of the upper layer of the adjacent spiral cord layer, while the inclination angle of the steel cords the core-material cord layer was opposite thereto. The end count of the core-material cord layer and that of the auxiliary belt layer were set at 18.06 cords/50 mm and 24.21 cords/50 mm, respectively.

Moreover, on the tire radial-direction inner side of each tire width-direction end of the spiral cord layer, a belt under-cushion rubber was arranged in accordance with the respective conditions shown in the tables below. The belt under-cushion rubber was arranged in a range that includes a region from the tire width-direction end of the spiral cord layer to the tire width-direction end of the core-material cord layer, extending from the position at 40 mm on the tire width-direction outer side to the position at 30 mm on the tire width-direction inner side based on the tire width-direction end of the spiral cord layer.

Various test tires were produced by modifying the conditions of the belt under-cushion rubber as shown in the tables below.

### <Fatigue Durability Test>

The thus obtained test tires were each mounted on an application rim, inflated to a prescribed internal pressure, and then subjected to a running test using an indoor drum tester (drum diameter = 1.7 m) at an applied load of 33.8 kN and a speed of 65 km/h until a defect occurred on the tire, and the distance traveled until the occurrence of the defect was measured. The results thereof are presented as indices, taking the distance traveled by the tire of Comparative Example 1 or 3 as 100. A larger value means a longer travel distance and a more favorable result. In addition, the modes of destruction observed in Examples and Comparative Examples are also shown.

The term "application rim" used herein refers to a rim defined in the below-described standard according to the tire size. The "prescribed internal pressure" refers to an air pressure that is defined in the below-described standard according to the maximum load capacity. Further, the "standard" refers to an industrial standard that is valid in each region where the tire is manufactured or used, such as "The Tire and Rim Association Inc. Year Book" in the U.S., "The European Tyre and Rim Technical Organisation Standard Manual" in Europe, or "JATMA Year Book" of Japan Automobile Tyre Manufacturers Association in Japan.

### <Cases Where PAN-based Carbon Fiber Cords Were Applied as Reinforcing Cords of Spiral Cord Layer>

The evaluation results of cases where PAN-based carbon fiber cords (cord structure: 12,000 dtex/1) were used as the reinforcing cords of the spiral cord layer are shown in Table 1 below. The end count of the spiral cord layer was set at 27.65 cords/50 mm.

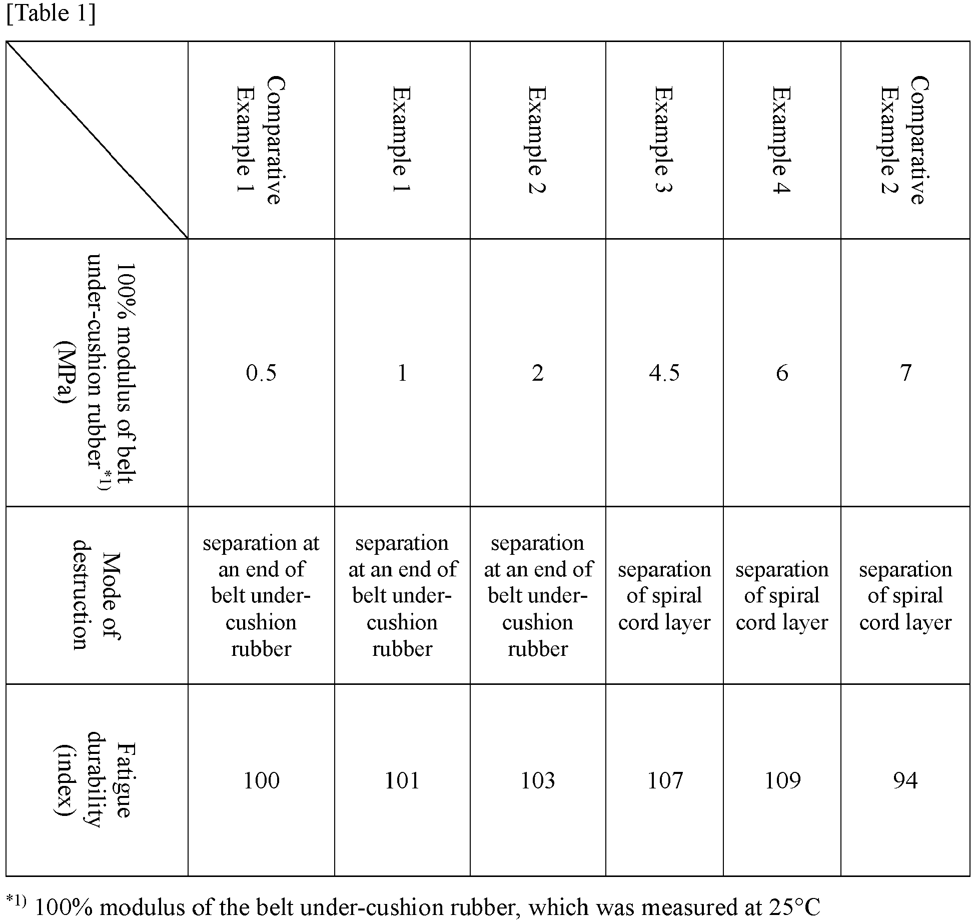

### <Cases Where Aramid Cords Were Applied as Reinforcing Cords of Spiral Cord Layer>

The results of cases where aramid cords (cord structure: 3,340 dtex//2/3) were used as the reinforcing cords of the spiral cord layer are shown in Table 2 below. The end count of the spiral cord layer was set at 25 cords/50 mm.

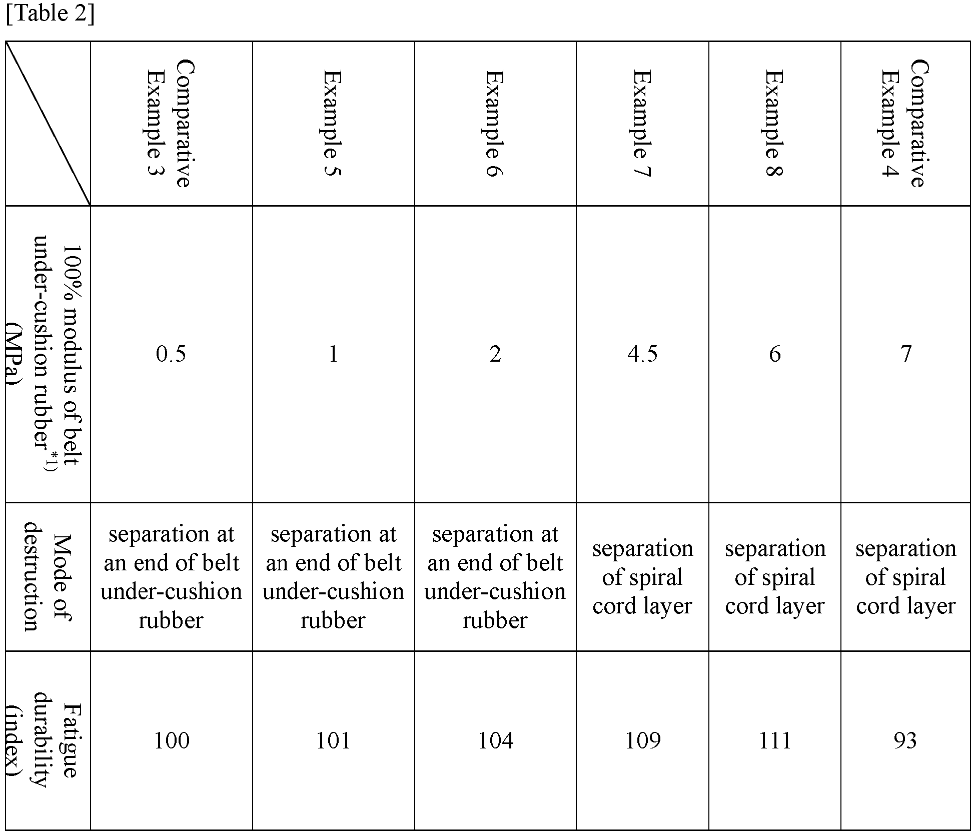

As shown in the tables above, it was confirmed that, according to the present invention, the occurrence of separation at a tire width-direction end of a spiral cord layer is inhibited and the fatigue durability can thereby be improved.

### DESCRIPTION OF SYMBOLS

- 1:: spiral cord layer
- 1A:: upper layer
- 1B:: lower layer
- 2:: core-material cord layer
- 10:: tire for trucks and buses
- 11, 21, 31:: tread portion
- 11a:: corner
- 12, 22, 32:: side wall portion
- 13, 23, 33:: bead portion
- 14, 24, 34:: carcass
- 15, 25, 35:: bead core
- 16, 26, 36:: bead filler
- 17, 27, 37a to 37b:: auxiliary belt layer
- 27a:: cap layer
- 27b:: layered layer
- 20:: tire for passenger vehicles
- 23a:: recess
- 18, 28, 38:: belt under-cushion rubber
- 30:: tire for construction vehicles
- 101, 102:: reinforcing cord

## Claims

1. A tire comprising:
a carcass toroidally extending between a pair of bead portions; and
a spiral cord layer arranged on a tire radial-direction outer side of the carcass in a crown portion, in which an upper layer and a lower layer are formed by spirally winding reinforcing cords,
wherein
the reinforcing cords of the spiral cord layer have an angle in a range of 10° to 45° with respect to a tire circumferential direction,
a belt under-cushion rubber is arranged on a tire radial-direction inner side of a tire width-direction end of the spiral cord layer, and
the belt under-cushion rubber has a 100% modulus in a range of 1 to 6 MPa.

2. The tire according to claim 1, comprising a core-material cord layer between the upper layer and the lower layer of the spiral cord layer.

3. The tire according to claim 1 or 2, wherein the 100% modulus of the belt under-cushion rubber is in a range of 1 to 4.5 MPa.
